# EUROPÄISCHE PATENTSCHRIFT

(11) **EP 2 606 496 B1**
(45) Veröffentlichungstag und Bekanntmachung des Hinweises auf die Patenterteilung: **24.04.2019**
(21) Anmeldenummer: 11738984.1
(22) Anmeldetag: 20.06.2011
(51) Int. Cl.: H01F 7/08, B60T 8/36, F16K 31/06

(54) **ELEKTROMAGNETEINRICHTUNG SOWIE FAHRERASSISTENZEINRICHTUNG**
ELECTROMAGNETIC DEVICE, AND DRIVER ASSISTANCE DEVICE
DISPOSITIF ÉLECTROMAGNÉTIQUE AINSI QUE DISPOSITIF D'ASSISTANCE À LA CONDUITE

(30) Priorität: 17.08.2010 DE 102010039400
(43) Veröffentlichungstag der Anmeldung: 26.06.2013
(73) Patentinhaber: Robert Bosch GmbH, 70442 Stuttgart (DE)
(72) Erfinder: STAHR, Wolf, 74232 Abstatt (DE); BRENNDOERFER, Daniel, 71634 Ludwigsburg (DE); GODBILLON, Pascal, 74074 Heilbronn (DE); SPEER, Harald, 71691 Freiberg (DE); KURZ, Edgar, 74081 Heilbronn-Horkheim (DE); BRAUN, Joel, 71720 Oberstenfeld (DE); STOKMAIER, Gerhard, 71706 Markgroeningen (DE); KRATZER, Dietmar, 71732 Tamm (DE)
(86) Internationale Anmeldenummer: PCT/EP2011/060235
(87) Internationale Veröffentlichungsnummer: WO 2012/022518

(56) Entgegenhaltungen:
- EP-A1- 0 444 007
- EP-A2- 0 088 371
- WO-A1-01/36243
- DE-A1- 4 126 672
- DE-A1- 4 244 444
- DE-A1- 10 311 486
- US-A- 3 250 293

## Beschreibung

### Stand der Technik

Die Erfindung betrifft eine Elektromagneteinrichtung mit einem Magnetanker und einem stirnseitig des Magnetankers angeordneten Ankergegenstück, wobei Magnetanker und Ankergegenstück relativ zueinander verlagerbar sind und zwischen einer Magnetankerstirnseite und einer Ankergegenstückstirnseite ein Luftspalt vorliegt. Die Erfindung betrifft weiterhin eine Fahrerassistenzeinrichtung.

Elektromagneteinrichtungen der eingangs genannten Art sind aus dem Stand der Technik bekannt. Sie können beispielsweise Bestandteil von Magnetventilen sein oder jeweils als Magnetventil ausgebildet sein, wobei die Magnetventile wiederum für Fahrerassistenzeinrichtungen, insbesondere ABS-, TCS- oder ESP-Einrichtungen, zum Einsatz kommen können. Die Elektromagneteinrichtung weist den Magnetanker auf, welcher relativ zu dem Ankergegenstück verlagerbar ist. Häufig ist dabei lediglich der Magnetanker verlagerbar, während das Ankergegenstück ortsfest angeordnet ist. Das Ankergegenstück kann beispielsweise als Polkern ausgebildet sein. Um die relative Verlagerung von Magnetanker und Ankergegenstück zu bewirken, wirken die beiden Elemente zusammen. Dazu weist beispielsweise das Ankergegenstück eine oder mehrere Spulen auf, während der Magnetanker aus einem magnetisierbaren oder magnetischen Material besteht. Das Ankergegenstück ist stirnseitig des Magnetankers vorgesehen. Üblicherweise sind der Magnetanker und das Ankergegenstück derart zueinander angeordnet, dass sie, unabhängig von der Verlagerung von Magnetanker und Ankergegenstück relativ zueinander, nicht miteinander in Verbindung treten können. Zwischen dem Magnetanker und dem Ankergegenstück beziehungsweise der dem Ankergegenstück zugewandten Stirnseite des Magnetankers und der dem Magnetanker zugewandten Stirnseite des Ankergegenstücks, also der Magnetankerstirnseite und der Ankergegenstückstirnseite, liegt demnach ein Spalt, der so genannte Luftspalt beziehungsweise Arbeitsluftspalt, vor. Die Größe des Luftspalts ist abhängig von der Position des Magnetankers in Bezug zu dem Ankergegenstück. Die Größe des Luftspalts ändert sich demnach bei der Verlagerung von Magnetanker und Ankergegenstück relativ zueinander. Der Begriff Luftspalt bedeutet nicht, dass der zwischen der Magnetankerstirnseite und der Ankergegenstückstirnseite vorliegende Spalt tatsächlich mit Luft gefüllt ist. Vielmehr kann er mit beliebigen Medien gefüllt sein und dient lediglich der Beabstandung von Magnetanker und Ankergegenstück.

Der Magnetanker und das Ankergegenstück bilden zusammen eine Stelleinrichtung aus. Die von dieser Stelleinrichtung erzeugbare Magnetkraft, welche die Verlagerung von Magnetanker und Ankergegenstück relativ zueinander realisiert, ist durch die Größe des Luftspalts charakterisiert. Das bedeutet, dass die Magnetkraft von der Größe des Luftspalts abhängig ist, wobei die Magnetkraft bei kleiner werdendem Luftspalt sehr stark - üblicherweise exponentiell - zunimmt. Diese starke Zunahme bei kleiner werdendem Luftspalt erschwert die stetige Stellbarkeit beziehungsweise die Proportionalisierung der Elektromagneteinrichtung.

Es ist bekannt, dass diesem starken Anstieg der Magnetkraft mit einer Vergrößerung des Luftspalts zumindest teilweise abgeholfen werden kann. Dies liegt darin begründet, dass die mit der Elektromagneteinrichtung realisierbare Stellkraft beziehungsweise Magnetkraft, welche für die relative Verlagerung von Magnetanker und Ankergegenstück sorgt, mit wachsendem Luftspalt exponentiell abnimmt. Der Verlauf der Magnetkraft über die Größe des Luftspalts wird also mit größer werdendem Luftspalt flacher, liegt jedoch gleichzeitig auf einem niedrigeren Niveau. Dieses niedrige Niveau der Magnetkraft, ohne die Möglichkeit, relevante Bauteile der Elektromagneteinrichtung, insbesondere die mindestens eine Spule, geometrisch zu vergrößern, ist jedoch problematisch. Dies gilt insbesondere bei der Verwendung der Elektromagneteinrichtung für ein stromlos geschlossenes Magnetventil. Hier muss die verfügbare Magnetkraft ausreichend groß sein, um das Magnetventil gegen eine schließend wirkende Druckfeder zu öffnen. Die Druckfeder ist üblicherweise so stark ausgelegt, dass sie bereits in einem gering vorgespannten Zustand die von dem Betriebsmedium des Magnetventils beziehungsweise von der Druckdifferenz über das Magnetventil bewirkte öffnende Kraft überwinden kann. Auch wird durch die Vergrößerung des Luftspalts eine sehr steife Druckfeder notwendig, weil die Gradienten von Federkraft und Magnetkraft über die Entfernung von Magnetanker und Ankergegenstück aufeinander abgestimmt sein sollten. Dabei wird häufig der Gradient der Federkraft größer gewählt als der Gradient der Magnetkraft.

Eine weitere Möglichkeit, den Anstieg der Magnetkraft zumindest teilweise zu beseitigen, ist die Realisierung einer so genannten Tauchstufe. Dabei greift ein Bereich des Ankergegenstücks zumindest bereichsweise in eine Ausnehmung des Magnetankers ein, sobald der Magnetanker eine bestimmte Entfernung von dem Ankergegenstück unterschreitet. Die Realisierung einer solchen Tauchstufe bei einer Elektromagneteinrichtung ist jedoch aufwändig, weil eine sehr genaue Führung des Magnetankers zu dem Ankergegenstück notwendig ist, um ein Aufeinandertreffen beziehungsweise einen Berührkontakt zwischen Magnetanker und Ankergegenstück - auch im Bereich der Tauchstufe und insbesondere in radialer Richtung - zu vermeiden. Ein solcher Berührkontakt würde zu einer deutlichen Verringerung des Wirkungsgrads der aus Magnetanker und Ankergegenelement bestehenden Stelleinrichtung führen. Die genaue Führung kann beispielsweise durch ein genaues Einpassen des Magnetankers in eine Magnetan kerführung, beispielsweise von einem Gehäuse der Elektromagneteinrichtung gebildet, realisiert sein. Andererseits muss der Magnetanker jedoch auch möglichst einfach, also ohne großen Kraftaufwand, verlagerbar sein. Somit müssen bei der Herstellung der Elektromagneteinrichtung sehr geringe Toleranzen realisiert werden, um zum einen die Tauchstufe und zum anderen eine leichtgängige Verlagerung des Magnetankers zu ermöglichen. Daraus resultieren jedoch hohe Herstellungskosten.

Aus dem Stand der Technik ist beispielsweise die EP0444007A1 bekannt. Diese zeigt ein Ventil, bei dem der bewegliche Kolben in einer seiner beiden stabilen Stellungen von einem Permanentmagneten gehalten wird, wobei dieser Kolben zusätzlich zu einer Polfläche eine vorzugsweise mit einer Dämpfungsplatte versehene Anschlagfläche aufweist. Hierbei ist zwischen den Polflächen ein Spalt beschrieben, der von den erforderlichen Schließkräften des Ventiles und den Verschleißzustand der Dämpfungsplatte abhängt, und daher in seiner Größe variieren kann. Dieser Spalt wird jedoch durch die den magnetischen Fluß leitende Einrichtung überbrückt, so dass eine große Haltekraft gewährleistet ist. EP 0444007A1 verwendet zur Überbrückung des Luftspalts eine magnetisch leitende Kurzschlussplatte, welche bspw. als weiche Spiralfeder ausgeführt ist. Darüber hinaus zeigt die Offenlegungsschrift WO 01/36243 A1 ein Elektromagnetventil mit einem Magnetanker und einem Ankergegenstück, wobei zwischen einer Magnetankerstirnseite und einer Ankergegenstückstirnseite ein Luftspalt vorliegt. In diesem ist eine tellerförmig ausgebildete Scheibe angeordnet. Der Stand der Technik zeigt zudem die DE10311486A1, WO2001036243A1, DE4244444A1, EP0444007A1, DE4126672A1, US3250293A, EP0088371A2. Offenbarung der Erfindung

Demgegenüber weist die Elektromagneteinrichtung mit den in Anspruch 1 genannten Merkmalen den Vorteil auf, dass ein günstiger Magnetkraftverlauf (Magnetkraft über die Größe des Luftspalts beziehungsweise den Abstand von Magnetanker und Ankergegenstück) der Elektromagneteinrichtung bei gleichzeitig geringen Herstellungskosten erzielt wird. Dies wird erfindungsgemäß erreicht, indem in dem Luftspalt eine mit der Magnetankerstirnseite und der Ankergegenstückstirnseite zumindest bereichsweise in Berührkontakt bringbare Scheibe angeordnet ist. Es wird also weder, wie aus dem Stand der Technik bekannt, der Luftspalt vergrößert, noch wird eine Tauchstufe, welche anspruchsvolle Toleranzanforderungen bedingt, vorgesehen. Diese Maßnahmen können jedoch selbstverständlich zusätzlich vorgesehen sein. In axialer Richtung der Elektromagneteinrichtung gesehen, liegt die Scheibe zwischen dem Magnetanker und dem Ankergegenstück vor. Anders ausgedrückt ist in dem Luftspalt eine in mindestens einer Relativposition von Magnetanker und Ankergegenstück mit der Magnetankerstirnseite und/oder der Ankergegenstückstirnseite zumindest bereichsweise in Berührkontakt stehende Scheibe angeordnet.

Die Scheibe kann dabei eine zentrale Ausnehmung aufweisen, welche insbesondere zur Aufnahme eines Federelements der Elektromagneteinrichtung dient. Das Federelement kann dabei dazu vorgesehen sein, eine Federkraft zu bewirken, welche der mittels der Elektromagneteinrichtung erzeugbare Magnetkraft entgegenwirkt. Üblicherweise ist das Federelement dazu vorgesehen, die Federkraft derart zu bewirken, dass der Magnetanker und das Ankergegenstück voneinander weg gedrängt werden. Die Scheibe besteht vorzugsweise aus einem gut magnetisierbaren Werkstoff, beispielsweise einem Metall, und ist insbesondere dazu vorgesehen, den in dem Luftspalt vorliegenden magnetischen Fluss zu übertragen. Stehen sowohl die Magnetankerstirnseite als auch die Ankergegenstückstirnseite in Berührkontakt mit der Scheibe, liegt in diesem Fall ein magnetischer Nebenschluss vor, durch welchen die Stellbarkeit der Elektromagneteinrichtung verbessert wird. Dabei soll die Scheibe jedoch vorzugsweise der relativen Verlagerung von Magnetanker und Ankergegenstück zueinander eine möglichst geringe Kraft entgegensetzen. Aus diesem Grund ist die Scheibe idealerweise mit geringem Kraftaufwand in axialer Richtung verformbar, weist also eine geringe Steifigkeit in diese Richtung auf. Nichtsdestotrotz soll die Scheibe derart elastisch sein, dass die Verformung bei Wegfall der verformenden Krft rückgängig gemacht wird, die Scheibe also die entsprechende Rückstellkraft bereitstellt beziehungsweise die entsprechende Elastizität aufweist.

Eine Weiterbildung der Erfindung sieht vor, dass die Magnetankerstirnseite und/oder die Ankergegenstückstirnseite konkav, konvex, kegelförmig oder kegelstumpfförmig sind. Prinzipiell können die Magnetankerstirnseite und die Ankergegenstückstirnseite beliebig ausgestaltet sein. Bevorzugt weisen sie jedoch eine der genannten Formen auf und sind dabei gegensinnig ausgebildet, die Magnetankerstirnseite bildet also zumindest bereichsweise ein Gegenstück zu einem Bereich der Ankergegenstückstirnseite beziehungsweise umgekehrt. beispielsweise verläuft also die Magnetankerstirnseite parallel zu der Ankergegenstückstirnseite, so dass der Abstand zwischen ihnen, das heißt die Größe des Luftspalts, an jedem Punkt im Wesentlichen gleich ist.

Erfindungsgemäß liegt der Berührkontakt in jeder Relativposition von Magnetanker und Ankergegenstück zueinander vor. Der Berührkontakt zwischen der Scheibe und dem Magnetanker und/oder dem Ankergegenstück beziehungsweise der jeweiligen Stirnseite, liegt demnach stets vor. In keiner Relativposition von Magnetanker und Ankergegenstück kommt es zu einem Abheben der Scheibe von der Magnetankerstirnseite beziehungsweise der Ankergegenstückstirnseite. Besonders vorteilhaft ist es, wenn die Scheibe in jeder Relativposition sowohl mit der Magnetankerstirnseite als auch der Ankergegenstückstirnseite in Berührkontakt steht. Auf diese Weise wird ein unstetiger Verlauf der Magnetkraft über verschiedene Relativpositionen von Magnetanker und Ankergegenstück zueinander vermieden. Tritt dagegen der Berührkontakt nur bei bestimmten Relativpositionen auf, so wird sich im Magnetkraftverlauf über die Größe des Luftspalts ein Knickpunkt einstellen beziehungsweise eine Unstetigkeit. Diese ist durch den eintretenden metallischen Kontakt verursacht, über welchen der eigentlich erwünschte magnetische Nebenschluss stattfindet. Eine derartige Unstetigkeit soll vermieden werden. Ihre Lage wäre von Toleranzen der Elektromagneteinrichtung abhängig, könnte also von Elektromagneteinrichtung zu Elektromagneteinrichtung streuen und sich eventuell auch während eines Betriebs der Elektromagneteinrichtung verändern. Sie wäre somit regelungs- beziehungsweise steuerungstechnisch allenfalls mit einer aufwändigen Kalibrierung, welche wiederum kostenträchtig ist, zu beherrschen.

Es soll jedoch ausdrücklich darauf hingewiesen werden, dass eine solche Vorhubvariante der Elektromagneteinrichtung, bei welcher der Berührkontakt nicht in jeder Relativposition von Magnetanker und Ankergegenstück zueinander vorliegt, ebenfalls realisiert werden kann. Bei einer solchen Vorhubvariante müssen Magnetanker und Ankergegenstück zunächst um eine bestimmte Strecke aufeinanderzu bewegt werden, bevor der Berührkontakt zwischen Magnetanker, Ankergegenstück und der Scheibe zustande kommt.

Erfindungsgemäß liegen der Berührkontakt zwischen der Scheibe und der Magnetankerstirnseite an mindestens einer ersten Berührstelle und der Berührkontakt zwischen der Scheibe und der Ankergegenstückstirnseite an mindestens einer zweiten Berührstelle vor, wobei die Berührstellen in radialer Richtung unterschiedlich, insbesondere nicht überlappend, angeordnet sind. Die Berührstellen können dabei punktförmig beziehungsweise flächig vorliegen. Von Bedeutung ist lediglich, dass sie in radialer Richtung an unterschiedlichen Positionen vorliegen. Beispielsweise ist die erste Berührstelle an einer ersten Radialposition und die zweite Berührstelle an einer - bezüglich der ersten Radialposition - weiter außen liegenden zweiten Radialposition vorgesehen. Besonders vorteilhaft ist es dabei, wenn sich die Berührstellen in radialer Richtung nicht überlappend, also in radialer Richtung voneinander beabstandet sind. Beispielsweise liegen die mindestens eine erste Berührstelle auf einem Kreis mit einem ersten Radius und die mindestens eine zweite Berührstelle auf einem Kreis mit einem von dem ersten Radius verschiedenen zweiten Radius. Je weiter die Berührstellen in radialer Richtung voneinander beabstandet sind, umso geringer ist die von der Federscheibe auf den Magnetanker beziehungsweise das Ankergegenstück ausgeübte Federkraft, wenn Magnetanker und Ankergegenstück aufeinander zu verlagert werden.

Erfindungsgemäß weist die Scheibe zur Ausbildung mindestens einer Federzunge, insbesondere ausgehend von einem Außenrand und/oder einem Innenrand, mindestens einen Schlitz, insbesondere Radialschlitz, auf. Um die Federsteifigkeit der Scheibe weiter zu verringern und sie demnach in axialer Richtung mit geringerem Kraftaufwand verformbar zu machen, ist der mindestens eine Schlitz vorgesehen. Dieser kann sich ausgehend von dem Außenrand oder dem Innenrand erstrecken, also entweder Außenrand oder Innenrand durchgreifen. Alternativ kann er auch von dem Außenrand und dem Innenrand beabstandet sein. In einer solchen Ausführungsform durchgreift er demnach weder den Außenrand noch den Innenrand der Scheibe. Der Schlitz verläuft vorzugsweise von dem Außenrand ausgehend nach innen beziehungsweise von dem Innenrand ausgehend nach außen, ist also als Radialschlitz ausgebildet. Unter Radialschlitz kann dabei ein gerader Schlitz zu verstehen sein, alternativ jedoch auch einen Schlitz, welcher lediglich nach innen beziehungsweise nach außen verläuft, unabhängig von seinem Verlauf, welcher beispielsweise gekrümmt ist. Durch den Schlitz entsteht die mindestens eine Federzunge. Vorzugsweise weist die Scheibe mehrere Schnitte und demnach auch mehrere Federzungen auf. Besonders vorteilhaft ist eine gerade Anzahl Federzungen, wobei sich jeweils zwei der Federzungen diametral gegenüberliegend angeordnet sind.

Eine Weiterbildung der Erfindung sieht vor, dass die Scheibe zumindest bereichsweise tellerförmig ist. Auf diese Weise kann ein vergleichsweise großer Luftspalt vorgesehen sein und dennoch die Scheibe gleichzeitig sowohl mit der Magnetankerstirnseite und der Ankergegenstückstirnseite in Berührkontakt stehen. Tellerförmig bedeutet dabei, dass ein Außenrand der Scheibe - im Querschnitt gesehen - in axialer Richtung geneigt ist, also beispielsweise bogenförmig verläuft.

Eine Weiterbildung der Erfindung sieht vor, dass die Scheibe aus einem magnetisierbaren und/oder biegeweichen Material besteht. Vorzugsweise besteht die Scheibe aus Metall. Das Material der Scheibe soll magnetisierbar sein, um den magnetischen Fluss zwischen Magnetanker und Ankergegenstück übertragen zu können. Zudem ist es vorteilhaft, wenn das Material der Scheibe biegeweich ist, um eine geringe Steifigkeit und somit eine gute Verformbarkeit der Scheibe in axialer Richtung zu ermöglichen.

Eine Weiterbildung der Erfindung sieht vor, dass die Elektromagneteinrichtung ein Magnetventil ist, wobei der Magnetanker mit einem Dichtelement des Magnetventils zu dessen Verlagerung wirkverbunden ist. Auf diese Weise wird bei einer Verlagerung des Magnetankers bezüglich des Ankergegenstücks auch das Dichtelement verlagert. Das Dichtelement ist üblicherweise dazu vorgesehen, eine Ventilöffnung des Magnetventils zu verschließen beziehungsweise freizugeben. Ist das Dichtelement zum Verschließen der Ventilöffnung angeordnet, so sitzt es üblicherweise in einem Ventilsitz des Magnetventils ein, welcher sowohl der Ventilöffnung als auch dem Dichtelement zugeordnet ist. Beispielsweise ist das Dichtelement in eine Ausnehmung des Magnetankers eingebracht und in dieser gehalten, wobei die Ausnehmung vorzugsweise auf einer dem Ankergegenstück abgewandten Seite des Magnetankers vorgesehen ist.

Die Erfindung betrifft weiterhin eine Fahrerassistenzeinrichtung, insbesondere ABS-, TCS- oder ESP-Einrichtung, mit mindestens einer als Magnetventil ausgebildeten Elektromagneteinrichtung, insbesondere gemäß den vorstehenden Ausführungen, wobei die Elektromagneteinrichtung einen Magnetanker und ein stirnseitig des Magnetankers angeordnetes Ankergegenstück aufweist, Magnetanker und Ankergegenstück relativ zueinander verlagerbar sind und zwischen einer Magnetankerstirnseite und einer Ankergegenstückstirnseite ein Luftspalt vorliegt. Dabei ist vorgesehen, dass in dem Luftspalt eine mit der Magnetankerstirnseite und der Ankergegenstückstirnseite zumindest bereichsweise in Berührkontakt bringbare Scheibe angeordnet ist. Die Elektromagneteinrichtung kann gemäß den vorstehenden Ausführungen weitergebildet sein.

Die Erfindung wird anhand der in der Zeichnung dargestellten Ausführungsbeispiele näher erläutert, ohne dass eine Beschränkung der Erfindung erfolgt. Dabei zeigen:
Figur 1 eine Seitenschnittansicht einer als Magnetventil ausgebildeten Elektromagneteinrichtung mit einer zwischen einem Magnetanker und einem Ankergegenstück angeordneten Scheibe,
Figur 2 eine schematische Seitenschnittansicht einer weiteren Elektromagneteinrichtung,
Figur 3 die Scheibe in einer ersten Ausführungsform,
Figur 4 eine zweite Ausführungsform der Scheibe,
Figur 5 eine dritte Ausführungsform der Scheibe,
Figur 6 die Scheibe in einer vierten Ausführungsform in Draufsicht,
Figur 7 die aus Figur 6 bekannte Scheibe in einer Seitenschnittansicht,
Figur 8 eine fünfte Ausführungsform der Scheibe, und
Figur 9 die Scheibe in einer sechste Ausführungsform.

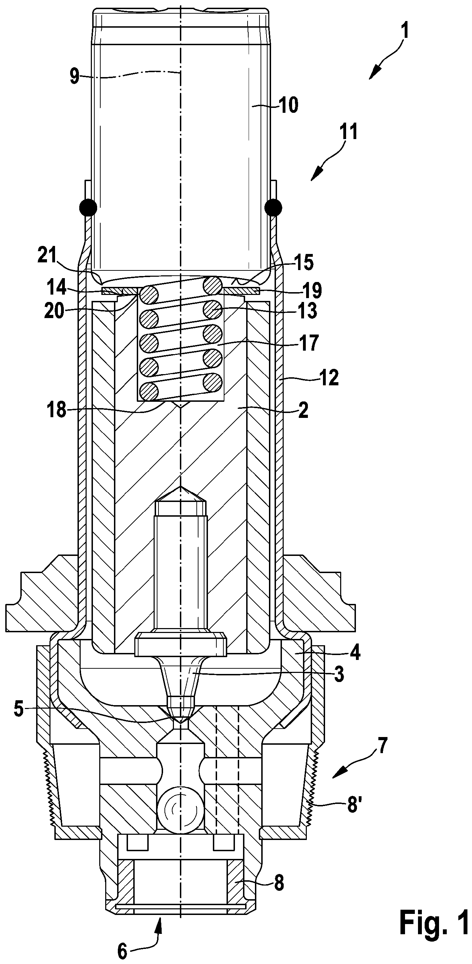

Die Figur 1 zeigt eine als Magnetventil 1 ausgebildete Elektromagneteinrichtung 1, wobei das Magnetventil 1 beispielsweise Bestandteil einer hier nicht dargestellten Fahrerassistenzeinrichtung ist. Das Magnetventil 1 weist einen Magnetanker 2 auf, welcher mit einem Dichtelement 3 des Magnetventils 1 wirkverbunden ist. Das Dichtelement 3 wirkt mit einem in einem Ventilkörper 4 ausgebildeten Ventilsitz 5 zusammen, um eine Strömungsverbindung zwischen einem Auslassanschluss 6 und einem Einlassanschluss 7 des Magnetventils 1 freizugeben beziehungsweise zu unterbrechen. Dem Auslassanschluss 6 ist in dem hier dargestellten Ausführungsbeispiel ein Filter 8 zugeordnet. Zusätzlich oder alternativ kann selbstverständlich auch dem Einlassanschluss 7 ein Filter 8' zugeordnet sein. Das hier dargestellte Magnetventil 1 ist entsprechend der Anordnung von Auslassanschluss 6 und Einlassanschluss 7 für eine radiale Anströmung und eine axiale Abströmung (bezüglich einer Längsachse 9 des Magnetventils 1) ausgelegt. Selbstredend kann jedoch die Anströmungsrichtung beziehungsweise die Abströmungsrichtung beliebig vorgesehen sein, also der Auslassanschluss 6 als Einlassanschluss und der Einlassanschluss 7 als Auslassanschluss verwendet werden.

Neben dem Magnetanker 2 weist das Magnetventil 1 ein Ankergegenstück 10 auf, welches zusammen mit dem Magnetanker 2 eine Stelleinrichtung 11 des Magnetventils 1 bildet. Das Ankergegenstück 10 ist beispielsweise als Polkern ausgebildet und weist zumindest eine elektrische Spule auf, so dass mittels des Ankergegenstücks 10 durch Anlegen einer Spannung an die Spule (also durch Bestromung des Magnetventils 1) eine Magnetkraft auf den Magnetanker 2 ausgeübt werden kann. Der Magnetanker 2 ist bezüglich der Längsachse 9 axial verschieblich gelagert, wobei die Lagerung insbesondere mittels eines Gehäuses 12 des Magnetventils 1 realisiert ist. An dem Gehäuse 12 ist dabei auch das Ankergegenstück 10 und der Ventilkörper 4 ortsfest gehalten. Somit kann der Magnetanker 2, beeinflusst durch die mittels des Ankergegenstücks 10 erzeugte Magnetkraft, relativ bezüglich des Magnetankers 2 beziehungsweise des Ventilkörpers 4 in axialer Richtung verlagert werden. Das Magnetventil 1, welches in der Figur 1 dargestellt ist, ist ein stromlos geschlossenes Magnetventil 1. Das
bedeutet, dass das Dichtelement 3 dichtend in dem Ventilsitz 5 einsetzt, solange das Magnetventil 1 nicht bestromt ist, also keine Magnetkraft mittels des Ankergegenstücks 10 erzeugt wird.

Zwischen dem Magnetanker 2 und dem Ankergegenstück 10 ist ein Federelement 13 angeordnet. Das Federelement 13 durchgreift einen von einer Magnetankerstirnseite 14 und einer Ankergegenstückstirnseite 15 in axialer Richtung begrenzten Luftspalt 16. Das Federelement 13 stützt sich in dem hier dargestellten Ausführungsbeispiel auf der Ankergegenstückstirnseite 15 ab. Auf seiner dem Ankergegenstück 10 abgewandten Seite sitzt es bereichsweise in einer Ausnehmung 17 des Magnetankers 2, welche als zentrale Bohrung ausgebildet ist. Dabei stützt es sich auf einem Grund 18 der Ausnehmung 17 ab. Das Federelement 13 bewirkt eine zwischen dem Magnetanker 2 und dem Ankergegenstück 10 wirkende Federkraft. Weil das Ankergegenstück 10 ortsfest angeordnet ist, drängt diese Federkraft den Magnetanker 2 und damit auch das Dichtelement 3 in Richtung des Ventilsitzes 5. Wird das Magnetventil 1 bestromt, wirkt also auf den Magnetanker 2 die entsprechende, in dem hier dargestellten Ausführungsbeispiel in Richtung des Ankergegenstücks 10 gerichtete Magnetkraft, so wird der Magnetanker 2 auf das Ankergegenstück 10 zubewegt. Dabei ist die bewirkte Magnetkraft zunächst größer als die Federkraft des Federelements 13. Bedingt durch die Bewegung des Magentankers 2 wird das Federelement 13 weiter gespannt, die Federkraft nimmt demnach zu. Entfällt die Magnetkraft, so bewirkt die Federkraft, dass der Magnetanker 2 wieder von dem Ankergegenstück 10 fort gedrängt wird.

Um die Stellbarkeit des Magnetventils 1 zu verbessern, ist in dem Luftspalt, welcher zwischen dem Magnetanker 2 und dem Ankergegenstück 10 beziehungsweise zwischen der Magnetankerstirnseite 14 und der Ankergegenstückstirnseite 15 vorliegt, eine Scheibe 19 derart angeordnet, dass die mit der Magnetankerstirnseite 14 und der Ankergegenstückstirnseite 15 zumindest bereichsweise in Berührkontakt bringbar ist. Bei dem in der Figur 1 dargestellten Magnetventil 1 ist es vorgesehen, dass der Berührkontakt in jeder Relativposition von Magnetanker 2 und Ankergegenstück 10 zueinander vorliegt. Die Magnetankerstirnseite 14 ist konvex ausgebildet, wölbt sich also in Richtung des Ankergegenstücks 10. Die Ankergegenstückstirnseite 15 ist dagegen konkav ausgebildet, weist also eine nach innen gerichtete Wölbung auf. Der Berührkontakt zwischen der Magnetankerstirnseite 14 und der Scheibe 19 liegt an einer ersten Berührstelle 20 vor. Eine zweite Berührstelle 21, zwischen welchen ein Berührkontakt zwischen der Ankergegenstückstirnseite 15 und der Scheibe 19 vorliegt, ist in radialer Richtung weiter außen liegend als die erste Berührstelle 20 vorgesehen. Die Berührstellen 20 und 21 sind dabei in radialer Richtung voneinander beabstandet, so dass keine Überlappung zwischen ihnen vorliegt.

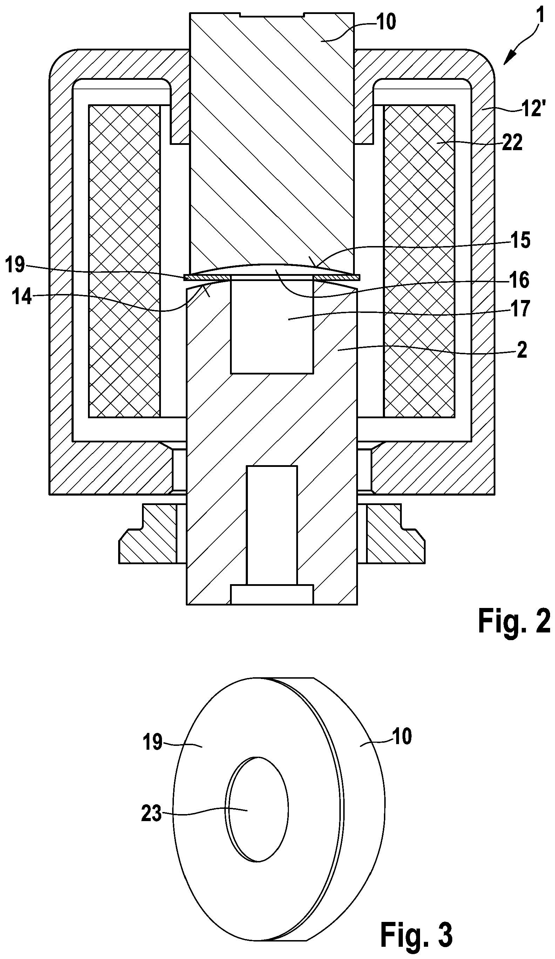

Die Figur 2 zeigt eine weitere Form der Elektromagneteinrichtung 1, welche beispielsweise ebenso als Magnetventil 1 vorliegen kann beziehungsweise als Teil eines Magnetventils 1 dient. Zu erkennen ist dabei der Magnetanker 2, welcher axial verlagerbar bezüglich eines Gehäuses 12' angeordnet ist. Das Ankergegenstück 10 ist dabei, ebenso wie es umgebende Spulen 22 bezüglich des Gehäuses 12' ortsfest. Das hier dargestellte Gehäuse 12' entspricht nicht dem anhand der Figur 1 beschriebenen Gehäuse 12. Das Gehäuse 12' dient vielmehr lediglich als Baugruppengehäuse für die Spulen 22. Das Gehäuse 12 ist zwar auch bei der Elektromagneteinrichtung 1 der Figur 2 vorhanden. Es ist jedoch nicht dargestellt, weil in der Figur 2 lediglich magnetisch wirksame, also insbesondere aus magnetischem Werkstoff bestehende, Bauteile abgebildet sind. Das Gehäuse 12 besteht jedoch üblicherweise aus einem nicht-magnetischen Werkstoff und hat demnach keinen oder zumindest lediglich einen geringen Einfluss auf das Magnetfeld der Spulen 22. Zwischen dem Magnetanker 2 und dem Ankergegenstück 10 beziehungsweise der Magnetankerstirnseite 14 und der Ankergegenstückstirnseite 15 liegt wiederum der Luftspalt 16 mit der darin angeordneten Scheibe 19 vor. Das Federelement 13 ist in der Figur 2 nicht dargestellt, ist jedoch, analog zu der in der Figur 1 dargestellten Elektromagneteinrichtung 1 in der Ausnehmung 17 angeordnet. Die hier vorgestellte Elektromagneteinrichtung 1 entspricht in ihrer Funktionalität im Wesentlichen der anhand der Figur 1 beschriebenen. Insofern sei auf die vorstehenden Ausführungen verwiesen.

Die Figur 3 zeigt eine erste Ausführungsform der Scheibe 19, abgestützt auf dem ausschnittsweise dargestellten Ankergegenstück 10. Es wird deutlich, dass die Scheibe 19 eine zentrale Ausnehmung 23 aufweist, durch welche beispielsweise das Federelement 13 hindurch treten kann. Die Scheibe 19 liegt hier in kreisrunder Form vor, auch die zentrale Ausnehmung 23 ist kreisrund.

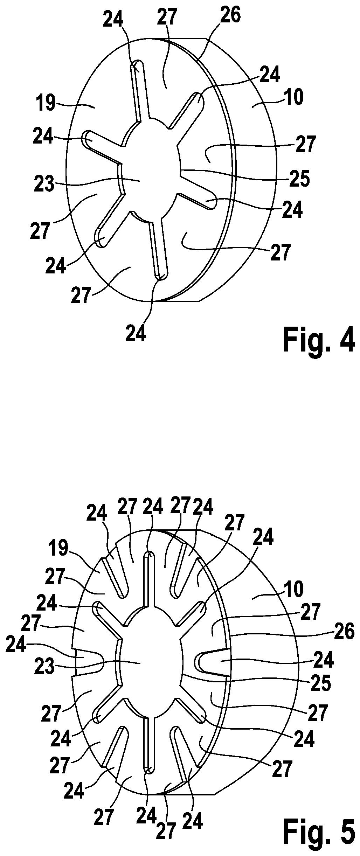

Die Figur 4 zeigt eine zweite Ausführungsform der Scheibe 19. Dabei ist es jedoch vorgesehen, dass die Scheibe Schlitze 24 aufweist. Diese gehen von einem Innenrand 25 der Scheibe 19, welcher durch die Ausnehmung 23 definiert ist, aus beziehungsweise durchgreifen diesen. Die Schlitze 24 liegen dabei als Radialschlitze vor und verlaufen demnach in radialer Richtung nach außen in Richtung eines Außenrand 26 der Scheibe 19. Die Schlitze 24 durchgreifen die Scheibe 19 jedoch nicht vollständig in radialer Richtung, sind also nur über eine Teilstrecke zwischen dem Innenrand 25 und dem Außenrand 26 vorgesehen. Die Schlitze 24 bilden Federzungen 27 aus. Wird die hier dargestellte Scheibe 19 in die Elektromagneteinrichtung 1 der Figuren 1 und 2 eingesetzt, so liegt die erste Berührstelle 20 im Bereich des Innenrands 25 und die zweite Berührstelle 21 im Bereich des Außenrands 26. Die Schlitze 24 bewirken dabei eine Verringerung der Steifigkeit der Scheibe 19 in axialer Richtung, so dass einem Aufeinanderzubewegen von Magnetanker 2 und Ankergegenstück 10 eine geringere Kraft entgegengesetzt wird, als dies bei der Scheibe 19 der Figur 3 der Fall ist.

Die Figur 5 zeigt eine dritte Ausführungsform der Scheibe 19. Dabei sind die Schlitze 24 sowohl ausgehend von dem Innenrand 25 als auch von dem Außenrand 26 vorgesehen. Die von dem Innenrand 25 und dem Außenrand 26 abgehenden Schlitze 24 sind dabei abwechselnd angeordnet. Auf diese Weise wird eine weitere Reduzierung der Steifigkeit der Scheibe 19 bewirkt.

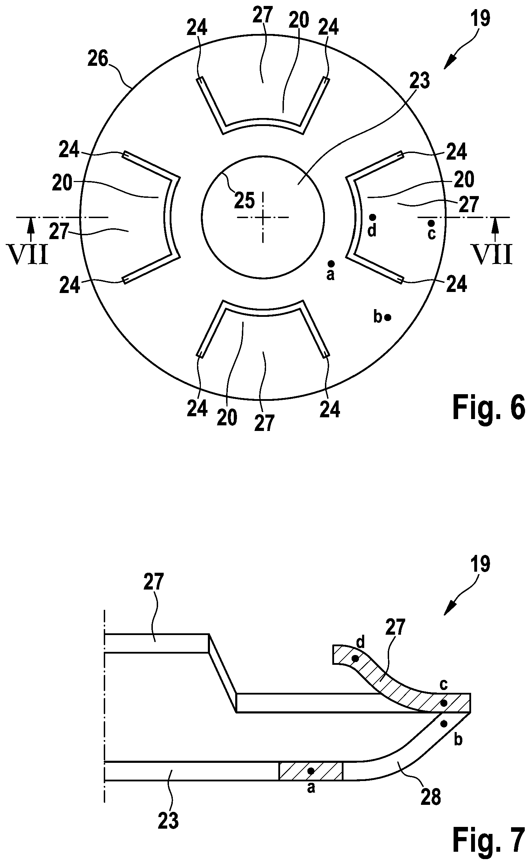

Die Figuren 6 und 7 zeigen die Scheibe 19 in einer vierten Ausführungsform, wobei die Figur 6 eine Draufsicht der Scheibe 19 und die Figur 7 eine Seitenschnittansicht derselben darstellen. Bei der hier vorgestellten Scheibe 19 sind vier Federzungen 27 durch Ausstanzen hergestellt. Dabei ist es vorgesehen, dass die erste Berührstelle 20 auf der radial innen liegenden Seite der Federzungen 27 vorliegt. Selbst verständlich kann jedoch auch die zweite Berührstelle 21 an dieser Stelle vorgesehen sein. Für alle Ausführungsformen der Scheibe 19 gilt, dass die Anordnung der Berührstellen 20 und 21 an der Scheibe von der Ausgestaltung der Magnetankerstirnseite 14 und der Ankergegenstückstirnseite 15 abhängt.

Wie anhand der Figur 7 zu erkennen ist, ist die Scheibe 19 tellerförmig geformt, was bedeutet, dass ein Rand 28 der Scheibe 19 in axialer Richtung ausgelenkt vorliegt. Vorteilhafterweise sind die Federzungen 27 derart ausgestaltet, dass sie in dieselbe Richtung ausgelenkt sind wie der Rand 28. Auf diese Weise wird eine Vergrößerung des axialen Abstands zwischen Magnetankerstirnseite 14 und Ankergegenstückstirnseite 15 erzielt beziehungsweise ein Überbrücken des Luftspalts 16 mittels der Scheibe 19 in jeder Relativposition von Magnetanker 2 und Ankergegenstück 10 zueinander erst möglich. Bei dieser Ausgestaltung der Scheibe 19 liegen die Punkte a, b, c und d in aufsteigender axialer Entfernung von einem Referenzpunkt vor. Der Punkt b ist demnach, bedingt durch den umgebogenen Rand 28, höher angeordnet als der Punkt a. Der Punkt c wiederum liegt höher als der Punkt b und der Punkt d höher als der Punkt c. In einer alternativen Ausgestaltung kann es jedoch auch vorgesehen sein, dass die Punkte b und c auf derselben Höhe in axialer Richtung liegen. Zur besseren Verdeutlichung sind die Punkte a, b, c und d sowohl in der Figur 6 als auch in der Figur 7 angedeutet.

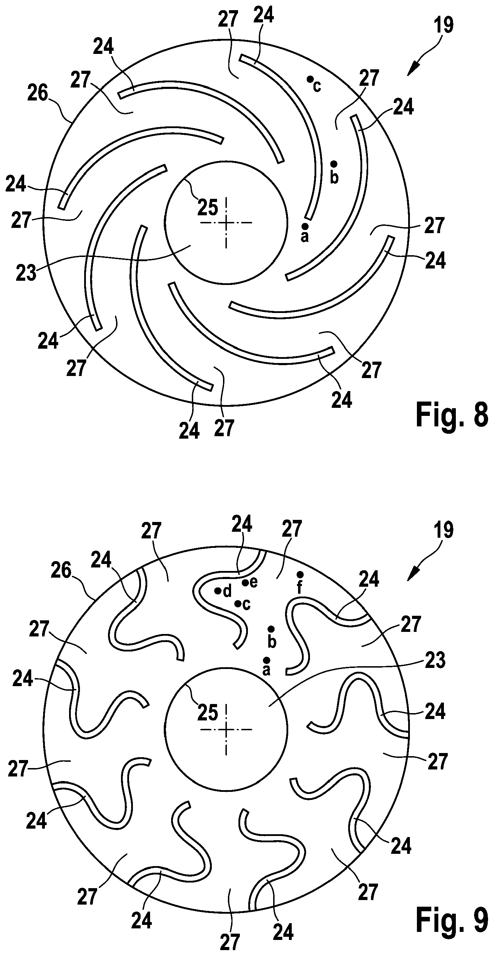

Die Figur 8 zeigt eine fünfte Ausführungsform der Scheibe 19. In dieser Ausführungsform durchgreifen die Schlitze 24 weder den Außenrand 26 noch den Innenrand 25 der Scheibe 19. Sie verlaufen ausgehend von einem dem Außenrand 26 naheliegenden Bereich spiralförmig in Richtung des Innenrands 25. Bedingt durch diesen spiralförmigen Verlauf wird die Länge der Federzunge 27 im Vergleich zu einem geraden radialen Verlauf vergrößert, so dass die Steifigkeit der Scheibe 19 in axialer Richtung verringert wird. Dabei kann es auch hier vorgesehen sein, das die Scheibe 19 topfartig geformt ist, so dass sich wiederum für die Punkte a, b und c eine ansteigende Höhe - in axialer Richtung - ergibt. Bei dem gezeigten Verlauf der Schlitze 24 ergibt sich eine Verringerung der Steifigkeit der Scheibe 19. Weil die Schlitze weder den Außenrand 26 noch den Innenrand 25 durchgreifen, bleibt die Scheibe 19 die Grundform der Scheibe 19 selbst bei Verformung erhalten. Auf diese Weise wird die Gefahr von Verhaken und/oder Verdrehen der Federzungen 27 verringert beziehungsweise beseitigt. Alternativ kann es jedoch auch vorgesehen sein, dass die Schlitze 24 entweder den Innenrand 25 oder den Außenrand 26 durchgreifen und dennoch den in der Figur 8 gezeigten spiralförmigen Verlauf aufweisen.

Die Figur 9 zeigt eine sechste Ausführungsform der Scheibe 19. Hier verlaufen die Schlitze 24 mäanderförmig. Sie weisen demnach zumindest einen Bogen auf. Die Scheibe 19 kann wiederum topfförmig ausgebildet sein. Damit ergibt sich auch hier eine aufsteigende Höhe für die Punkte a, b, c, d, e und f. Auch hier kann - analog zu der in der Figur 8 vorgestellten Scheibe 19 - eine Verlängerung der Federzungen 27 und damit eine Verringerung der Steifigkeit in axialer Richtung bewirkt werden. Es soll darauf hingewiesen werden, dass die Schlitze 24 der anhand der Figuren 9 beschriebenen Scheibe 19 anstelle des Außenrand 26 auch den Innenrand 25 durchgreifen können. Es kann auch vorgesehen sein, dass die Schlitze 24 - wie anhand der Figur 8 gezeigt - weder den Innenrand 25 noch den Außenrand 26 durchgreifen, von beiden demnach beabstandet ist.

## Patentansprüche

1. Elektromagneteinrichtung (1) mit einem Magnetanker (2) und einem stirnseitig des Magnetankers (2) angeordneten Ankergegenstück (10), wobei Magnetanker (2) und Ankergegenstück (10) relativ zueinander verlagerbar sind und zwischen einer Magnetankerstirnseite (14) und einer Ankergegenstückstirnseite (15) ein Luftspalt (16) vorliegt, wobei in dem Luftspalt (16) eine mit der Magnetankerstirnseite (14) und der Ankergegenstückstirnseite (15) zumindest bereichsweise in Berührkontakt bringbare Scheibe (19) angeordnet ist,, wobei die Scheibe (19) zumindest bereichsweise tellerförmig ist, sodass ein äußerer Rand (28) der Scheibe (19) in axialer Richtung ausgelenkt ist, wobei der Berührkontakt in jeder Relativposition von Magnetanker (2) und Ankergegenstück (10) zueinander zwischen der Scheibe (19) und der Magnetankerstirnseite (14) an mindestens einer ersten Berührstelle (20) und zwischen der Scheibe (19) und der Ankergegenstückstirnseite (15) an mindestens einer zweiten Berührstelle (21) vorliegt, wobei die Berührstellen (20,21) in radialer Richtung unterschiedlich angeordnet sind, **dadurch gekennzeichnet, dass** die Scheibe (19) zur Ausbildung mindestens einer Federzunge (27) mindestens einen Schlitz (24) aufweist, und dass zur Vergrößerung des axialen Abstands zwischen Magnetankerstirnseite (14) und Ankergegenstückstirnseite (15) die Federzunge (27) in dieselbe Richtung ausgelenkt ist wie der Rand (28), wobei die zweite Berührstelle (21) auf einer radial innen liegenden Seite der Federzunge (27) und in radialer Richtung weiter außen liegend als die erste Berührstelle (20) vorliegt.

2. Elektromagneteinrichtung nach Anspruch 1, **dadurch gekennzeichnet, dass** die Magnetankerstirnseite (14) und/oder die Ankergegenstückstirnseite (15) konkav, konvex, kegelförmig oder kegelstumpfförmig sind.

3. Elektromagneteinrichtung nach einem der vorhergehenden Ansprüche, **dadurch gekennzeichnet, dass** die Scheibe (19) aus einem magnetisierbaren Material besteht.

4. Elektromagneteinrichtung nach einem der vorhergehenden Ansprüche, **dadurch gekennzeichnet, dass** die Elektromagneteinrichtung (1) ein Magnetventil ist, wobei der Magnetanker (2) mit einem Dichtelement (3) des Magnetventils zu dessen Verlagerung wirkverbunden ist.

5. Fahrerassistenzeinrichtung, insbesondere ABS-, TCS- oder ESP-Einrichtung, **gekennzeichnet durch** mindestens eine als Magnetventil ausgebildete Elektromagneteinrichtung (1) gemäß einem oder mehreren der vorhergehenden Ansprüche.

## Claims

1. Solenoid device (1) having a magnet armature (2) and an armature counterpiece (10) which is arranged at the end of the magnet armature (2), wherein the magnet armature (2) and the armature counterpiece (10) can be moved in relation to one another, and an air gap (16) is present between a magnet armature end (14) and an armature counterpiece end (15), wherein a disc (19) which can be placed in contact at least in certain areas with the magnet armature end (14) and the armature counterpiece end (15) is arranged in the air gap (16), wherein the disc (19) is plate-shaped, at least in certain areas, with the result that an outer edge (20) of the disc (19) is deflected in the axial direction, wherein in every relative position of the magnet armature (2) and armature counter piece (10) with respect to one another the contacts between the disc (19) and the magnetic armature end side (14) occurs at at least a first contact point (20), and that between the disc (19) and the armature counter piece and side (50) occurs at at least a second contact point (21), wherein the contact points (20, 21) are arranged differently in the radial direction, **characterized in that** the disc (19) has at least one slot (24) forming at least one spring tongue (27), and **in that** in order to enlarge the axial distance between the magnet armature end side (14) and the armature opposing end side (15) the spring tongue (27) is deflected in the same direction as the edge (20), wherein the second contact point (21) occurs on a radially inner side of the spring tongue (27) and lying further outward in the radial direction than the first contact point (20).

2. Solenoid device according to Claim 1, **characterized in that** the magnet armature end (14) and/or the armature counterpiece end (15) is/are concave, convex, in the shape of a cone or in the shape of a frustum.

3. Solenoid device according to either of the preceding claims, **characterized in that** the disc (19) is composed of a magnetizable material.

4. Solenoid device according to one of the preceding claims, **characterized in that** the solenoid device (1) is a solenoid valve, wherein the magnet armature (2) is operatively connected to a sealing element (3) of the solenoid valve in order to move same.

5. Driver assistance device, in particular ABS, TCS or ESP device, **characterized by** at least one solenoid device (1) which is embodied as a solenoid valve according to one or more of the preceding claims.

## Revendications

1. Dispositif électromagnétique (1) comprenant un induit magnétique (2) et une pièce complémentaire d'induit (10) disposée du côté avant de l'induit magnétique (2), dans lequel l'induit magnétique (2) et la pièce complémentaire d'induit (10) peuvent être déplacés l'un par rapport à l'autre et il est prévu entre un côté avant d'induit magnétique (14) et un côté avant de pièce complémentaire d'induit (15) un entrefer (16), dans lequel un disque (19) pouvant être mis en contact, au moins par zones, avec le côté avant d'induit magnétique (14) et le côté avant de pièce complémentaire d'induit (15) est disposé dans l'entrefer (16), dans lequel le disque (1) est réalisé, au moins par zones, sous forme de coupelle, de sorte qu'un bord extérieur (28) du disque (19) soit dévié dans la direction axiale, le contact dans chaque position relative de l'induit magnétique (2) et de la pièce complémentaire d'induit (10) l'un par rapport à l'autre étant prévu entre le disque (19) et le côté avant d'induit magnétique (14) au niveau d'au moins une zone de contact (20) et entre le disque (19) et le côté avant de pièce complémentaire d'induit (15) au niveau d'au moins une deuxième zone de contact (21), les zones de contact (20, 21) étant disposées différemment dans la direction radiale, **caractérisé en ce que** le disque (19), pour réaliser au moins une langue à ressort (27), présentant au moins une fente (24) et **en ce que** pour augmenter la distance axiale entre le côté avant d'induit magnétique (14) et le côté avant de pièce complémentaire d'induit (15), la langue à ressort (27) est déviée dans la même direction que le bord (28), la deuxième zone de contact (21) étant prévue sur un côté de la langue à ressort (27) situé radialement à l'intérieur et plus vers l'extérieur dans la direction radiale que la première zone de contact (20).

2. Dispositif électromagnétique selon la revendication 1, **caractérisé en ce que** le côté avant d'induit magnétique (14) et/ou le côté avant de pièce complémentaire d'induit (15) est/sont concaves, convexes, coniques ou tronconiques.

3. Dispositif électromagnétique selon l'une quelconque des revendications précédentes, **caractérisé en ce que** le disque (19) est constitué d'un matériau magnétisable.

4. Dispositif électromagnétique selon l'une quelconque des revendications précédentes, **caractérisé en ce que** le dispositif électromagnétique (1) est une électrovanne, dans lequel l'induit magnétique (2) est fonctionnellement relié à un élément d'étanchéité (3) de l'électrovanne pour le déplacement de cette dernière.

5. Dispositif d'assistance à la conduite, notamment dispositif ABS, TCS ou ESP, **caractérisé par** au moins un dispositif électromagnétique (1) réalisé sous la forme d'une électrovanne selon une ou plusieurs des revendications précédentes.
